# FASCICULE DE BREVET EUROPEEN

(11) **EP 1 106 903 B1**
(45) Date de publication et mention de la délivrance du brevet: **02.01.2008**
(21) Numéro de dépôt: 00403393.2
(22) Date de dépôt: 04.12.2000
(51) Int. Cl.: F17C 3/02

(54) **Citerne pour le transport de gaz liquéfié et véhicule équipé d'une telle citerne**
Tankbehälter für den Transport von Flüssiggasen und Fahrzeug das mit einem solchen Behälter ausgestattet ist
Storage tank for transport of liquefied gas and vehicle equipped with such tank

(30) Priorité: 07.12.1999 FR 9915399
(43) Date de publication de la demande: 13.06.2001
(73) Titulaire: Cryolor, 57365 Ennery (FR)
(72) Inventeur: Fontanille, Patrick, 57070 Metz (FR)
(74) Mandataire: Le Moenner, Gabriel

(56) Documents cités:
- DE-A- 4 309 491
- FR-A- 1 469 545
- FR-A- 2 565 664
- US-A- 3 163 313
- US-A- 4 176 761
- US-A- 5 533 340

## Description

La présente invention concerne les citernes pour le transport de gaz liquéfié ayant typiquement une capacité d'emport supérieure à environ 4 tonnes de liquide, du type comprenant une enveloppe extérieure dans laquelle est disposé au moins un récipient intérieur destiné à contenir le liquide à transporter. Des citernes existent, telles que représentées dans DE 4309491.

Dans la pratique, l'enveloppe extérieure est adaptée à la géométrie du récipient intérieur déterminée en fonction des densités du liquide transporté et des charges transportables maximales autorisées selon les pays. Cette approche permet d'optimiser le poids à vide de la citerne et du véhicule moteur la transportant ou le traitant mais présente l'inconvénient d'allonger considérablement les délais de mise à disposition, d'accroître les coûts d'étude, d'augmenter le nombre de composants de la citerne et du véhicule et d'augmenter corrélativement les coûts de maintenance.

La présente invention a pour objet de proposer un nouvel agencement de citerne présentant une plus grande polyvalence, permettant de diminuer considérablement les délais de mise à disposition des matériels de transport et d'abaisser notablement leurs coûts.

Pour ce faire, selon une caractéristique de l'invention, la citerne comprend une enveloppe extérieure de dimensions prédéterminées fixes et au moins un récipient intérieur ayant des dimensions adaptées aux conditions d'utilisation de la citerne, typiquement sélectionné dans un groupe de récipients intérieurs de dimensions différentes prédéterminées correspondant à des plages de masses de liquides, typiquement comprises entre 4 et 70 tonnes, par exemple entre 4 et 14 tonnes, typiquement entre 7 et 12 tonnes pour des camionnettes et camions, entre 15 et 40 tonnes, pour des semi-remorques avec des poids total roulants compris entre 19 tonnes (véhicule 2 essieux en France) et 60 tonnes (semi-remorque en Suède), et entre 50 et 70 tonnes pour des citernes sur wagons ferroviaires. L'invention vise aussi des véhicules de transport plus particulièrement terrestres équipés de telles citernes.

D'autres caractéristiques et avantages de l'invention ressortiront de la description suivante de modes de réalisation, donnés à titre illustratif mais nullement limitatif, faite en référence avec les dessins annexés, sur lesquels :
- la figure 1 est une vue schématique en coupe longitudinale partielle d'une première configuration de citerne selon l'invention;
- la figure 2 est une vue en coupe transversale schématique de la citerne de la figure 1; et
- les figures 3 et 4 sont des vues analogues aux figures 1 et 2 montrant une autre configuration de citerne selon l'invention.

Sur les dessins et dans la description qui va suivre, les éléments identiques ou analogues sont repérés par les mêmes chiffres de référence, éventuellement indicés.

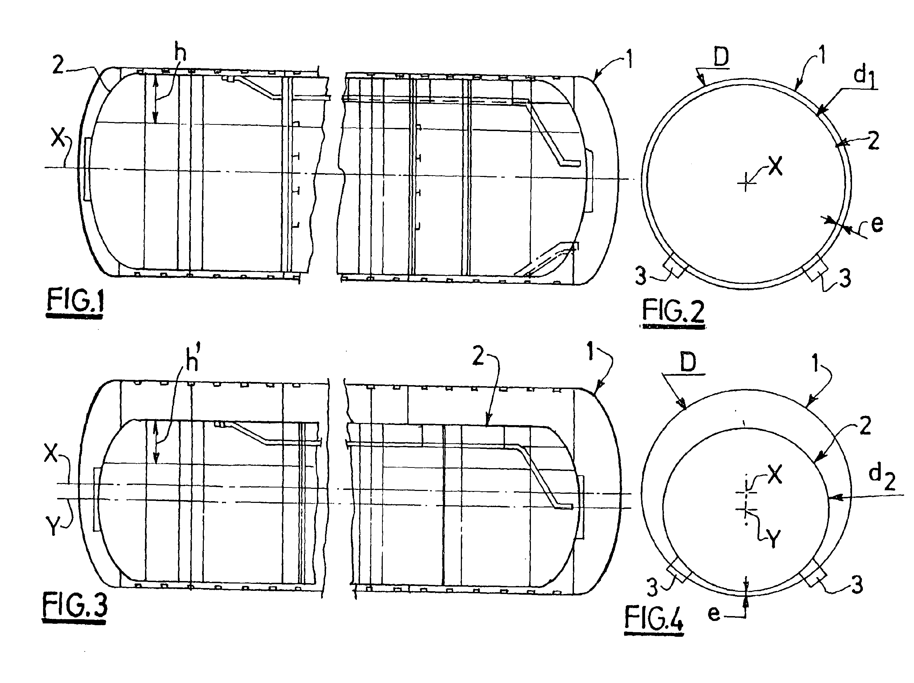

On a représenté, à titre d'exemple, sur les figures 1 et 2 une citerne selon l'invention dans sa configuration avec un poids total roulant de 45 tonnes pour le transport d'oxygène liquide ou de 42 tonnes pour le transport d'azote liquide.

A titre de comparaison et d'illustration, on a représenté, sur les figures 3 et 4, à la même échelle, la configuration d'une citerne selon l'invention pour un poids total roulant de 40 tonnes pour le transport d'oxygène liquide ou de 37,5 tonnes pour le transport d'azote liquide.

Selon un aspect de l'invention, dans ces deux configurations, la citerne comprend une enveloppe extérieure légère 1 de dimensions prédéterminées fixes, en l'occurrence d'une longueur hors tout d'environ 9 mètres et d'un diamètre hors tout D d'environ 2,3 mètres, constitué par l'assemblage coaxial de viroles cylindriques d'acier d'environ 3 mm d'épaisseur munies de couples ou anneaux de renforcement.

Dans cette enveloppe 1 de format unique est disposé un récipient intérieur 2 résistant à la pression et thermiquement isolé, ayant des dimensions variables selon le produit et les quantités de ce produit à transporter (ce qui est figuré sur les figures 1 et 3 par la hauteur h, h' de la phase gazeuse au-dessus de la masse liquide dans le récipient intérieur), réalisé également par assemblage coaxial de viroles cylindriques en acier inoxydable et pourvu d'une isolation périphérique adaptée. Le récipient 2 comporte des circuits de remplissage/vidange traversant l'enveloppe 1 en des endroits accessibles aux utilisateurs.

Dans le mode de réalisation "à grande capacité" des figures 1 et 2, les réservoirs 1 et 2 ont le même axe horizontal X, le diamètre d₁ du récipient étant déterminé pour que la distance radiale e entre les réservoirs soit à la valeur minimale pour optimiser la position du centre de gravité de l'ensemble. De façon similaire, les espacements axiaux inter-parois à l'avant et à l'arrière sont réduits à des valeurs minimales.

Dans le mode de réalisation des figures 3 et 4, le récipient intérieur 2 a un diamètre hors tout d₂ nettement plus petit que le diamètre D de l'enveloppe 1 et est disposé dans cette dernière avec son axe Y au-dessous de l'axe X de l'enveloppe 1, l'espace minimum inter-parois e étant aménagé dans la partie basse de la citerne.

Dans ce mode de réalisation, les espaces axiaux inter-parois avant et arrière sont en général nettement plus grands.

Comme on le voit sur les figures 2 et 4, dans l'une ou l'autre des configurations, l'enveloppe 1 et le réservoir intérieur 2 sont positionnés et fixés l'un par rapport à l'autre et supportés sur la plateforme du véhicule porteur (non représentée) par des structures de supportage 3 réparties le long de génératrices en partie inférieure de la citerne.

En variante, et selon les législations des pays, l'enveloppe 1 peut contenir deux récipients intérieurs 2 de petites dimensions, similaires ou différentes pour les deux récipients, par exemple d'azote liquide et d'argon liquide positionnés l'un à côté de l'autre suivant l'axe de l'enveloppe 1 et munis chacun de leurs propres circuits de vidange et remplissage.

Les citernes selon l'invention sont typiquement montées, de façon fixe ou amovible, sur une semi-remorque tractée par un tracteur ou positionnées sur porteurs ou des wagons et servent au transport de gaz de l'air liquéfié, oxygène, azote ou argon, et d'autres gaz liquéfiés de densités comparables, notamment l'éthylène ou le mélange ternaire commercialisé sous l'appellation Crylène.

Comme on le comprendra de la description qui précède, l'agencement selon l'invention, bien que grèvant légèrement le poids à vide pour les plus petites masses à transporter, présente de très nombreux avantages, tenant à la possibilité de préfabrication de composants extérieurs, qui deviennent de ce fait plus standards, à la diminution du nombre de composants à gérer, se traduisant par un abaissement notable du coût des études et des approbations nationales, des réductions sensibles de coût de fabrication et des délais de mise à disposition des citernes et, in fine, par une baisse des coûts de maintenance pour l'exploitant.

## Revendications

1. Procédé d'agencement d'une citerne pour le transport de gaz liquéfié, consistant à disposer au moins un récipient intérieur (2) d'une capacité d'emport supérieure à 4 tonnes et destiné à contenir le liquide sélectionné dans un groupe de récipients de dimensions différentes prédéterminées adaptées aux conditions d'utilisation de la citerne dans une enveloppe extérieure (1) de dimensions prédéterminées fixes.

2. Procédé selon la revendication 1, **caractérisé en ce qu'**au moins l'enveloppe extérieure (1) est cylindrique d'axe horizontal (X).

3. Procédé selon la revendication 2, **caractérisé en ce que** le récipient intérieur (2) est cylindrique d'axe horizontal (Y).

4. Procédé selon l'une des revendications 1 à 3, **caractérisé en ce que** sa capacité d'emport est inférieure à 70 tonnes.

5. Procédé selon la revendication 4, **caractérisé en ce que** sa capacité d'emport est supérieure à 15 tonnes.

6. Procédé selon la revendication 5, **caractérisé en ce que** sa capacité d'emport est inférieure à 40 tonnes.

7. Procédé selon la revendication 5, **caractérisé en ce que** sa capacité d'emport est supérieure à 50 tonnes.

8. Procédé selon la revendication 4, **caractérisé en ce que** sa capacité d'emport est inférieure à 14 tonnes.

9. Procédé selon l'une des revendications précédentes, **caractérisé en ce que** la citerne est montée sur un véhicule à roues.

10. Procédé selon l'une des revendications précédentes, **caractérisé en ce que** le gaz liquéfié est un gaz de l'air.

## Claims

1. Method for arranging a tank for transporting liquefied gas, consisting in providing at least one inner receptacle (2) having a carrying capacity higher than 4 tonnes and suitable for containing the liquid selected from a group of receptacles having different predefined dimensions and adapted to the conditions of use of the tank in an outer envelope (1) having fixed predefined dimensions.

2. Method according to Claim 1, **characterized in that** at least the outer envelope (1) is cylindrical with a horizontal axis (X).

3. Method according to Claim 2, **characterized in that** the inner receptacle (2) is cylindrical with a horizontal axis (Y).

4. Method according to one of Claims 1 to 3, **characterized in that** its carrying capacity is lower than 70 tonnes.

5. Method according to Claim 4, **characterized in that** its carrying capacity is higher than 15 tonnes.

6. Method according to Claim 5, **characterized in that** its carrying capacity is lower than 40 tonnes.

7. Method according to Claim 5, **characterized in that** its carrying capacity is higher than 50 tonnes.

8. Method according to Claim 4, **characterized in that** its carrying capacity is lower than 14 tonnes.

9. Method according to one of the preceding claims, **characterized in that** the tank is mounted on a wheeled vehicle.

10. Method according to one of the preceding claims, **characterized in that** the liquefied gas is an air gas.

## Patentansprüche

1. Verfahren zur Aufstellung eines Tankbehälters für den Transport von Flüssiggasen, darin bestehend, mindestens einen inneren Behälter (2) mit einer Tragfähigkeit über 4 Tonnen, der dazu bestimmt ist, die Flüssigkeit zu enthalten, und der aus einer Gruppe von Behältern mit unterschiedlichen vorbestimmten Abmessungen ausgewählt ist, die an die Verwendungsbedingungen des Tankbehälters angepasst sind, in einer äußeren Hülle (1) mit festen vorbestimmten Abmessungen anzuordnen.

2. Verfahren nach Anspruch 1, **dadurch gekennzeichnet, dass** mindestens die äußere Hülle (1) zylindrisch mit einer Horizontalachse (X) ist.

3. Verfahren nach Anspruch 2, **dadurch gekennzeichnet, dass** der innere Behälter (2) zylindrisch mit einer Horizontalachse (Y) ist.

4. Verfahren nach einem der Ansprüche 1 bis 3, **dadurch gekennzeichnet, dass** die Tragfähigkeit unter 70 Tonnen liegt.

5. Verfahren nach Anspruch 4, **dadurch gekennzeichnet, dass** die Tragfähigkeit über 15 Tonnen liegt.

6. Verfahren nach Anspruch 5, **dadurch gekennzeichnet, dass** die Tragfähigkeit unter 40 Tonnen liegt.

7. Verfahren nach Anspruch 5, **dadurch gekennzeichnet, dass** die Tragfähigkeit über 50 Tonnen liegt.

8. Verfahren nach Anspruch 4, **dadurch gekennzeichnet, dass** die Tragfähigkeit unter 14 Tonnen liegt.

9. Verfahren nach einem der vorhergehenden Ansprüche, **dadurch gekennzeichnet, dass** der Tankbehälter auf einem Fahrzeug mit Rädern montiert ist.

10. Verfahren nach einem der vorhergehenden Ansprüche, **dadurch gekennzeichnet, dass** das Flüssiggas ein Gas der Luft ist.
